(19) Europäisches Patentamt
European Patent Office
Office européen des brevets

(11) **EP 3 331 144 A1**

(12) **EUROPEAN PATENT APPLICATION**

(43) Date of publication:
**06.06.2018 Bulletin 2018/23**

(51) Int Cl.:
*H02M 1/32* (2007.01)          *H02M 7/483* (2007.01)
*H02M 1/36* (2007.01)

(21) Application number: **16201775.0**

(22) Date of filing: **01.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **General Electric Technology GmbH 5400 Baden (CH)**

(72) Inventors:
• **ADAMCZYK, Andrzej**
  **Stafford, Staffordshire ST17 0HD (GB)**
• **GUPTA, Robin**
  **Stafford, Staffordshire ST16 3UT (GB)**

(74) Representative: **Fischer, Michael Maria et al**
  **General Electric Technology GmbH**
  **GE Corporate Intellectual Property**
  **Brown Boveri Strasse 7**
  **5400 Baden (CH)**

(54)   **IMPROVEMENTS IN OR RELATING TO HVDC POWER CONVERTERS**

(57)   In the field of high voltage direct current (HVDC) power converters there is provided a HVDC power converter (10; 70; 80; 90; 100) which comprises first and second DC terminals (12, 14) for connection to a DC network (16). The power converter (10; 70; 80; 90; 100) also includes at least one converter limb (18A, 18B, 18C). The or each converter limb (18A, 18B, 18C) extends between the first and second DC terminals (12, 14) and includes first and second limb portions (22A, 22B, 22C, 24A, 24B, 24C) that are separated by a respective AC terminal (26A, 26B, 26C). The AC terminal (26A, 26B, 26C) of the or each converter limb (18A, 18B, 18C) is for connection to a respective AC phase (a, b, c) of an AC network (20). The or each first limb portion (22A, 22B, 22C) extends between the first DC terminal (12) and a corresponding AC terminal (26A, 26B, 26C), and the or each second limb portion (24A, 24B, 24C) extends between the second DC terminal (14) and a corresponding AC terminal (26A, 26B, 26C). Each limb portion (22A, 22B, 22C, 24A, 24B, 24C) includes a respective valve (28) that is operable to selectively permit the flow of current through the corresponding limb portion (22A, 22B, 22C, 24A, 24B, 24C) and hence between a respective DC terminal (12, 14) and the corresponding AC terminal (26A, 26B, 26C) to thereby in use transfer power between the DC and AC networks (16, 20). The power converter (10; 70; 80; 90; 100) also includes at least one discharge circuit (44) which is electrically connected between at least one converter limb (18A, 18B, 18C) and ground (50) to selectively provide a current discharge path (54) from the or each converter limb (18A, 18B, 18C) to ground (50).

Figure 1(a)

## Description

This invention relates to a high voltage direct current (HVDC) power converter.

In HVDC power transmission, alternating current (AC) electrical power is converted to high voltage direct current (DC) power for transmission via overhead lines and/or undersea cables. This conversion reduces the cost per kilometre of the lines and/or cables, and is therefore cost-effective when power needs to be transmitted over a long distance. Once the transmitted electrical power reaches its target destination, the high voltage DC electrical power is converted back to AC electrical power before being distributed to local networks.

The conversion of AC power to DC power is also commonly utilized in power transmission networks in circumstances where it is necessary to interconnect two AC networks operating at different frequencies.

HVDC power converters are required at each interface between AC and DC networks to effect the required conversion between AC power and DC power.

According to an aspect of the invention there is provided a HVDC power converter comprising:

first and second DC terminals for connection to a DC network;
at least one converter limb, the or each converter limb extending between the first and second DC terminals, the or each converter limb including first and second limb portions separated by a respective AC terminal, the AC terminal of the or each converter limb being for connection to a respective AC phase of an AC network, the or each first limb portion extending between the first DC terminal and a corresponding AC terminal, the or each second limb portion extending between the second DC terminal and a corresponding AC terminal, each limb portion including a respective valve operable to selectively permit the flow of current through the corresponding limb portion and hence between a respective DC terminal and the corresponding AC terminal to thereby in use transfer power between the DC and AC networks; and
at least one discharge circuit electrically connected between at least one converter limb and ground to selectively provide a current discharge path from the or each converter limb to ground.

The inclusion of a one or more such discharge circuits, connected within the power converter in the aforementioned manner, permits the voltage level of a DC transmission conduit, i.e. a DC transmission line or cable, which in use is connected to one of the first or second DC terminals of the power converter, to be reduced very rapidly by discharging the current flowing in the said DC transmission conduit to ground via the said one or more discharge circuits.

Such a rapid reduction in the operating voltage of a DC transmission conduit might, for example, be needed for safety reasons if a given DC power transmission network, within which the transmission conduit is located, needs to be de-energised for repair or maintenance. It may also be desirable with particular reference to symmetrical monopole transmission schemes in which a single transmission conduit to ground fault results in the current in the faulty conduit being discharged to zero while the otherwise healthy conduit is overcharged up to a level approaching the insulation protection of the transmission conduit, and so needs to have its voltage level reduced at least to some extent.

In addition, the electrical connection of the or each discharge circuit between a given converter limb and ground provides the option of having the power converter control the discharge process, e.g. by controlling operation of the corresponding valve which lies between the DC terminal to which the transmission conduit needing to be rapidly discharged is connected, i.e. by controlling operation of a corresponding discharge valve, in order to selectively permit the flow of discharge current from the said DC terminal, via the associated limb portion, to ground. Such control of the discharge process allows, for example, the flow of discharge current to be stopped at any time (by controlling the said valve to prevent the flow of discharge current therethrough). As a consequence, e.g. in relation to recovery from a single pole fault in a symmetrical monopole transmission scheme, the discharge process can be stopped once the voltage of the transmission conduit of interest falls to a desired value, which need only be some percentage of a nominal operating voltage. This, in turn, allows the transmission scheme to be started much more quickly than, e.g. conventional DC transmission conduit discharge arrangements which require a complete discharge down to zero of the voltage of the transmission conduit of interest.

Moreover, in the arrangement of the invention the discharge switching element within the or each discharge circuit is not exposed to a long duration of DC voltage stress across, e.g. open contacts, that otherwise arises in conventional DC transmission conduit discharge arrangements that are electrically connected directly between a given DC terminal or DC transmission conduit and ground. As a result the discharge switching element included in the invention can be simpler and less expensive than those incorporated in conventional DC transmission conduit discharge arrangements.

Furthermore, the discharge switching element needs only to operate at zero (or practically zero) current and so it does not have to embody a current making or breaking capability. Hence still further costs savings are possible with respect to still further reduced performance requirements of the discharge switching element included in the invention.

Preferably at least one discharge circuit includes a selectively openable and closable discharge switching element.

Such a switching element desirably facilitates blocking of the current discharge path, e.g. under normal operating conditions of the associated HVDC power converter. One example of an especially preferred discharge switching element is an AC grounding switch. Such grounding switches do not provide a DC voltage stress withstand capability and so are considerably less expensive than, e.g. the DC grounding switches required in conventional DC transmission conduit discharge arrangements.

Optionally at least one discharge circuit includes a grounding reactor.

The impedance of such a reactor depends on the frequency of the electrical signal applied to it, i.e. according to:

$$z_x(w) = w.L$$

where,

$z_x(w)$ is the reactor impedance at angular frequency $w$; and
L is the reactor inductance at the same angular frequency $w$.

Accordingly, under normal operation of the power converter of the invention, i.e. when the voltages at the first and second DC terminals are balanced, such a grounding reactor is exposed to an AC voltage at the fundamental frequency and so the grounding reactor presents a high impedance between the corresponding converter limb and the ground. As a consequence, the inductance of the grounding reactor can be selected so that it has negligible effect on the normal operation of the power converter.

Meanwhile, a grounding reactor offers essentially zero (or very minimal) impedance when a DC voltage is applied across it, and so such a reactor is able to provide a low impedance path to ground, as required, when it is decided to reduce the DC voltage presented at a given first or second DC terminal by an associated DC transmission conduit.

At least one discharge circuit may additionally include a series-connected resistor.

The inclusion of such a resistor provides extra help to dissipate the energy associated with a DC voltage at a given DC terminal it is desired to reduce.

In another preferred embodiment of the invention one or more series-connected resistors is selectively switchable in and out of the corresponding discharge circuit.

Such an arrangement permits the or each such resistor to perform an additional function during some other operation of the power converter, e.g. such as a pre-insertion resistor which may be included in some HVDC power converters to limit the amplitude of an uncontrolled inrush current that may flow from a connected AC network during initial energisation of the power converter.

Optionally at least one discharge circuit is electrically connected to an AC network side of the AC terminal within a corresponding converter limb.

Having one or more discharge circuits arranged in such a way helps to ensure that a single discharge circuit can be used to reduce and/or discharge a DC voltage arising at either of the first and second DC terminals.

Preferably the HVDC power converter includes a plurality of discharge circuits each of which is electrically connected between a respective single converter limb and ground.

Such an arrangement provides the benefit of having one or more redundant discharge circuits which allows for both greater operational reliability and the option of servicing or repairing a given discharge circuit while continuing to operate the power converter.

In addition, such a plurality of discharge circuits can provide shorter DC voltage discharge times.

The HVDC power converter may further include a control unit programmed to control the switching of each valve within the power converter and, when it is desired to reduce the voltage of a DC transmission conduit of interest electrically connected in use to one or other of the first and second DC terminals, being further programmed to:

(a) control each valve to prevent the flow of current therethrough; and
(b) control the valve located within at least one limb portion lying between the said DC terminal to which the DC transmission conduit of interest is electrically connected and the discharge circuit, to allow the flow of discharge current through the said valve and hence through the or each corresponding limb portion and on through the discharge circuit.

The inclusion of such a control unit advantageously allows the power converter to control all aspects of the discharge process, i.e. by selecting as required the appropriate valve to act as a designated discharge valve, with all of the attendant benefits mentioned above that such a discharge process brings.

Preferably each valve therein includes a chain-link converter formed from a plurality of series connected chain link modules, each of which chain link module includes a plurality of individual switching elements electrically connected with an energy storage device.

The inclusion of such a chain-link converter within each valve allows each valve to operate, as desired, to provide a stepped variable voltage source which helps to improve the efficiency with which the power converter is able to transfer power between respective AC and DC networks.

Optionally the control unit is programmed to control the chain-link converter located within at least one said limb portion lying between the said DC terminal to which the DC transmission conduit of interest is electrically connected and the discharge circuit to allow current to flow therethrough by selectively switching each chain link module within the or each said chain-link converter into a bypassed state.

Switching each chain link module into a bypassed state, preferably to all practical purposes simultaneously, creates a low impedance path through the corresponding chain-link converter and hence through the associated limb portion, and thereby establishes such a low impedance path between the corresponding DC terminal and ground.

The control unit may be programmed to control the chain-link converter located within at least one said limb portion lying between the said DC terminal to which the DC transmission conduit of interest is electrically connected and the discharge circuit to allow current to flow therethrough by selectively switching each chain link module within the or each said chain-link converter between respective bypassed and full blocking states.

Having a control unit programmed in such a manner allows the power converter of the invention to selectively permit and prevent the flow of current through the or each given chain-link converter, and thereby enables the power converter to control the shape and amplitude of the resulting discharge current that flows through the or each associated discharge circuit.

In yet another preferred embodiment of the invention the control unit is programmed to control the chain-link converter located within at least one said limb portion lying between the said DC terminal to which the DC transmission conduit of interest is electrically connected and the discharge circuit to allow current to flow therethrough by selectively having one or more chain link modules within the or each said chain-link converter provide a voltage source while the or each other chain link module within the or each said chain-link converter is switched into a bypassed state whereby a cumulative voltage arises across the or each said chain-link converter.

Controlling the or each said chain-link converter in such a manner, i.e. as a controlled voltage source, permits very fine control of the shape and amplitude of the resulting discharge current that flows through the associated discharge circuit.

There now follows a brief description of preferred embodiments of the invention, by way of non-limiting example, with reference being made to the following figures in which:

Figure 1(a) shows a schematic view of a HVDC power converter according to a first embodiment of the invention in a first operational mode;

Figure 1(b) shows a schematic view of a chain-link converter which forms a part of the power converter shown in Figure 1(a);

Figure 1(c) shows the chain-link converter of Figure 1(b) with several of the chain link modules therein providing a voltage source;

Figure 1(d) shows the chain-link converter shown in Figure 1(b) with each chain link module therein switched into a bypassed state;

Figure 1(e) shows the HVDC power converter of Figure 1(a) in a second operational mode;

Figure 2 shows a schematic view of a HVDC power converter according to a second embodiment of the invention;

Figure 3 shows a schematic view of a HVDC power converter according to a third embodiment of the invention;

Figure 4 shows a schematic view of a HVDC power converter according to a fourth embodiment of the invention; and

Figure 5 shows a schematic view of a HVDC power converter according to a fifth embodiment of the invention.

A HVDC power converter according to a first embodiment of the invention is designated generally by reference numeral 10.

The first power converter 10 has first and second DC terminals 12, 14 which, in use, are connected to a DC network 16.

The first power converter 10 includes three converter limbs 18A, 18B, 18C each of which is associated with a respective phase a, b, c of a three-phase AC network 20 with which the first power converter 10 is, in use, connected.

More particularly, in the embodiment shown, each converter limb 18A, 18B, 18C extends between the first and second DC terminals 12, 14 and includes first and second limb portions 22A, 24A, 22B, 24B, 22C, 24C that are separated by a respective corresponding AC terminal 26A, 26B, 26C, with each AC terminal 26A, 26B, 26C being connected, in use, to a respective phase a, b, c of the aforementioned AC network 20. More particularly still, each first limb portion 22A, 22B, 22C extends between the first DC terminal 12 and the corresponding AC terminal 26A, 26B, 26C while each second limb portion 24A, 24B, 24C extends between the second DC terminal 14 and the corresponding AC terminal 26A, 26B, 26C.

Each limb portion 22A, 24A, 22B, 24B, 22C, 24C includes a respective valve 28 that is operable to selectively permit the flow of current through the corresponding limb portion 22A, 24A, 22B, 24B, 22C, 24C and hence between a respective DC terminal 12, 14 and the corresponding AC terminal 26A 26B, 26C to thereby in use transfer power between the DC and AC networks 16, 20.

Power converters according to other embodiments of the invention may be configured to handle fewer than or more than three phases and hence may have a fewer or greater number of corresponding converter limbs.

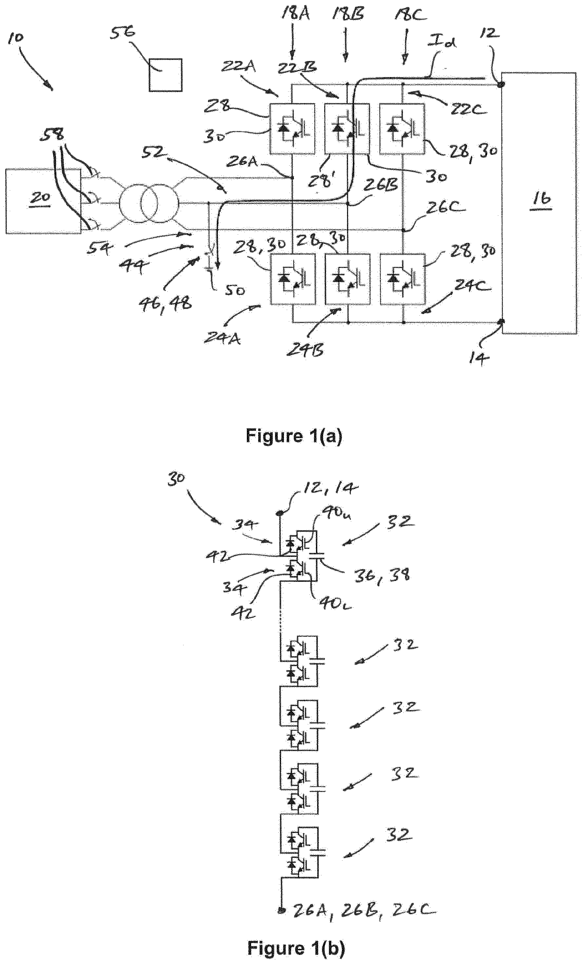

In the embodiment shown each valve 28 is defined by a respective chain-link converter 30 which is formed from a plurality of series connected chain link modules 32, as shown schematically in Figure 1(b).

Each chain link module 32 includes a plurality of individual switching elements 34 that are electrically connected with an energy storage device 36. More particularly, in the embodiment shown in Figures 1(a) and 1(b), each energy storage device 36 takes the form of a capacitor 38 and each of the aforementioned switching elements 34 takes the form of a semiconductor switch 40, such as an insulated-gate bipolar transistor (IGBT), connected in parallel with an anti-parallel diode 42.

Additionally, the semiconductor switches 40, anti-parallel diodes 42 and capacitor 38 within each chain link module 32 are connected with one another in a known half-bridge arrangement, as shown, so as to define a 2-quadrant unipolar module that can provide zero or positive voltage and can conduct current in two directions.

In other embodiments of the invention (not shown) one or more of the chain link modules 32 may be configured in a known full bridge arrangement so as to define a 4-quadrant bipolar module which is able to provide zero, positive or negative voltage and can conduct current in two directions.

Furthermore, in yet more embodiments of the invention (also not shown) one or more of the valves 28 may include a single switching element such as a diode, a thyristor, a Light-Triggered Thyristor (LTT), a Gate Turn-Off thyristor (GTO), a Gate Commutated Thyristor (GCT) or an Integrated Gate Commutated Thyristor (IGCT), or a series-connected string of such individual switching elements.

Returning to the embodiment shown, the first power converter 10 also includes a single discharge circuit 44 which, in turn, solely includes a selectively openable and closable discharge switching element 46 in the form of an AC grounding switch 48. Preferably the AC ground switch 48 is of a mechanical type although this need not necessarily be the case.

The discharge circuit 44, i.e. AC grounding switch 48, is electrically connected between the converter limb 18B associated with the second phase b of the AC network 20 and ground 50. More particularly, the AC grounding switch 48 is connected to an AC network side 52 of the corresponding AC terminal 26B.

In other embodiments of the invention, however, the discharge circuit may be connected in a different manner, may be connected between a different converter limb and/or between more than one converter limb and ground.

In any event, the discharge circuit 44, i.e. the AC grounding switch 48, selectively provides a current discharge path 54 between the associated converter limb 18, i.e. the converter limb 18B associated with the second phase b of the AC network 20 in the illustrated embodiment, to ground 50. In this regard the AC grounding switch 48 is kept open during normal operation of the first power converter 10.

In addition to the foregoing, the first power converter 10 also includes a control unit 56 that is arranged in operative communication with each valve 28, i.e. each chain-link converter 30, and is programmed to control the switching of each said valve 28, i.e. each said chain-link converter 30.

Furthermore, when it is desired to reduce the voltage of a DC transmission conduit of interest, i.e. a DC transmission line or cable of interest (not shown), that is in use electrically connected to, e.g. the first DC terminal 12, the control unit 56 is additionally programmed to:

(a) control each valve 28, i.e. each chain-link converter 30, to prevent the flow of current therethrough; and
(b) control the valve 28 located within the limb portion 22B lying between the said DC terminal to which the DC transmission conduit of interest is electrically connected, i.e. the first DC terminal 12 in this example embodiment, and the discharge circuit 44, i.e. to control a so-called discharge valve 28', to allow the flow of discharge current $I_d$ through the said discharge valve 28' and hence through the corresponding limb portion 22B and on through the discharge circuit 44.

As well as the foregoing, after each valve 28 is first controlled to prevent the flow of current therethrough, i.e. after each of the chain link modules 32 in each valve 28 is switched into a full blocking state in which both semiconductor switches 40 are turned off, the AC grounding switch 48 is moved from its usual open position to a closed position. Any AC circuit breaker 58 which might be operable to protect the first power converter 10, e.g. by isolating it from other power converters within a power transmission network, is also operated to provide such protection.

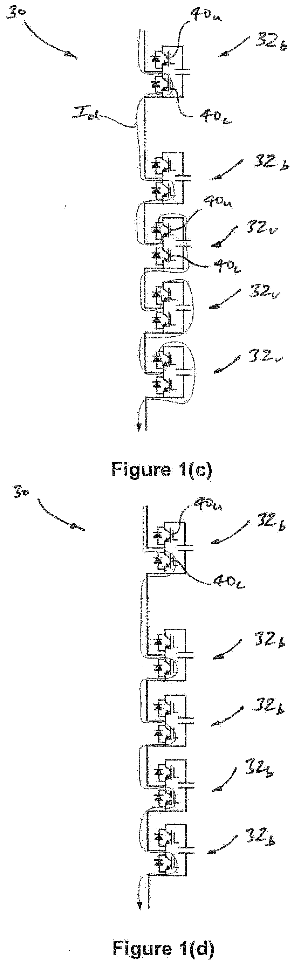

Thereafter the control unit 56 is programmed to control the discharge valve 28' (and only the discharge valve 28'), i.e. the chain-link converter 30 included therein, to allow the flow of discharge current $I_d$ therethrough by selectively having one or more chain link modules 32 within the said chain-link converter 30 of the discharge valve 28' provide a voltage source while the or each other chain link module 32 within the said given chain-link converter 30 is switched into a bypassed state, as shown in Figure 1(c).

More particularly, a given chain link module $32_v$ provides a voltage source when the upper semiconductor switch $40_u$ therein is turned on and the lower semiconductor switch $40_l$ therein is turned off, while a given chain link module $32_b$ is switched into a bypassed state when the upper semiconductor switch $40_u$ therein is turned off and the lower semiconductor switch $40_l$ therein is turned on. In this manner a varying, cumulative voltage arises across the chain-link converter 30 within the discharge valve 28'.

The level of cumulative voltage can be regulated, i.e. by altering the number of chain link modules $32_v$ providing a voltage source, so as to finely control the shape and amplitude of the discharge current $I_d$ flowing through the discharge circuit 44. For example, the control unit 56 could incorporate a proportional integral (PI) control module in order to have the discharge current $I_d$ track a desired current reference value. Such a current reference value may ramp up to a target value, or it can ramp down to a target value. Additionally, the respective chain link modules $32_v$ which provide a voltage source are preferably alternated so that any energy that might be absorbed by the capacitors 38 therein is evenly distributed across the various chain link modules 32 within the chain-link converter of the discharge valve 28'.

In any event, the flow of a discharge current $I_d$ through the discharge circuit 44, i.e. through the AC grounding switch 48, reduces the voltage level of the DC transmission conduit electrically connected with the first DC terminal 12.

The control unit 56 may continue to selectively permit, in the foregoing manner, the flow of discharge current $I_d$ until the voltage level of the said DC transmission conduit reaches zero, or alternatively some other desired value. Once the desired voltage level is achieved the control unit 56 controls the chain-link converter 30 of the discharge valve 28' to prevent the further flow of discharge current $I_d$ therethrough, i.e. each of the chain link modules 32 in the discharge valve 28' is switched into a full blocking state in which both semiconductor switches 40 are turned off.

In other embodiments of the invention the control unit 56 within the first power converter 10 may instead or additionally be programmed to control the chain-link converter 30 located within the discharge valve 28' to allow current to flow therethrough by selectively switching each chain link module $32_b$ within the said chain-link converter 30 into a bypassed state, i.e. by selectively turning off the upper semiconductor switch $40_u$ and turning on the lower semiconductor switch $40_l$ within each chain link module, as shown in Figure 1(d).

In this manner the discharge valve 28', i.e. the corresponding chain-link converter 30, creates a low impedance path between a respective DC terminal 12, 14 and the discharge circuit 44 so as to facilitate the flow of the discharge current $I_d$ to ground 50.

Each chain link module 32 within the discharge valve 28' remains in the aforementioned bypassed state until the voltage level of the DC transmission conduit of interest again falls to a desired valve, which may or may not be zero. Thereafter all of the chain link modules 32 within the discharge valve 28' are switched into their respective full blocking states, i.e. with both the upper and lower semiconductor switches $40_u$, $40_l$ therein turned off.

In still further embodiments of the invention the control unit 56 within the first power converter 10 may instead or additionally be programmed to control the chain-link converter 30 located within the discharge valve 28' to allow current to flow therethrough by selectively switching each chain link module 32 between respective bypassed and full blocking states, i.e. between a bypassed state in which the upper semiconductor switch $40_u$ in each chain link module $32_b$ is turned off and the lower semiconductor switch $40_l$ within each chain link module $32_b$ is turned on, and a full blocking state in which both the upper and lower semiconductor switches $40_u$, $40_l$ in each chain link module 32 are turned off.

In this manner the discharge valve 28', i.e. the corresponding chain-link converter 30, only periodically creates a low impedance path between a respective DC terminal 12, 14 and the discharge circuit 44, and so the flow of the discharge current $I_d$ to ground 50 likewise occurs only periodically such that the shape and amplitude of the discharge current $I_d$ is controlled. For example, a hysteresis control module may be incorporated into the control unit 56 of the first power converter 10 to control the chain-link converter 30 within the discharge valve 28' in such a way as to limit the amplitude of the discharge current $I_d$ flowing through the discharge circuit 44.

Such repeated switching of each chain link module 32 within the discharge valve 28' between the said bypassed and full blocking states continues until the voltage level of the DC transmission conduit of interest again falls to a desired valve, which may or may not be zero. Thereafter all of the chain link modules 32 within the discharge valve 28' are switched into their respective full blocking states, i.e. with both the upper and lower semiconductor switches $40_u$, $40_l$ therein turned off.

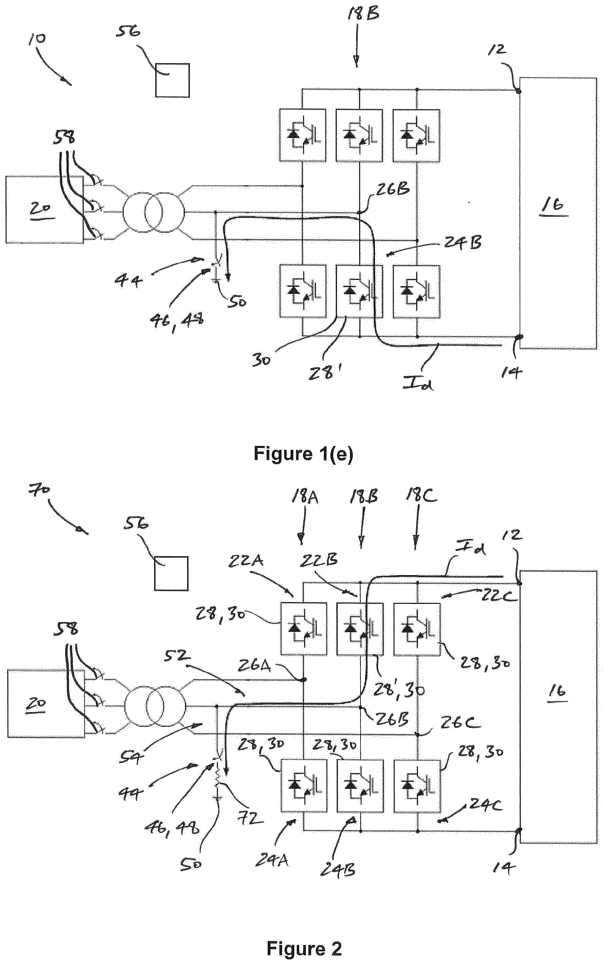

In addition to all of the foregoing, the first power converter 10 shown in Figure 1(a) can also, as a result of the way in which the discharge circuit 44 therein is electrically connected to an AC network side 52 of the AC terminal 26B of the converter limb 18B associated with the second phase b of the AC network 20, be used to reduce the voltage level of a DC transmission conduit that is in use electrically connected to the second DC terminal 14, i.e. as shown in Figure 1(e).

The first power converter 10, and more particularly the control unit 56 therein, may perform in essentially any of the manners set out above, except that the discharge valve 28' is designated as one or more of the valves 28 lying between the second DC terminal 14 and the discharge circuit 44, e.g. the single valve 28' lying in the second limb portion 24B of the converter limb 18B associated with the second phase b of the AC network 20.

A power converter 70 according to a second embodiment of the invention is shown schematically in Figure 2.

The second power converter 70 is very similar to the first power converter 10 and like features share the same reference numeral.

The second power converter 70 does, however, differ from the first power converter 10 in that the discharge circuit 44 within the second power converter 70 additionally includes a series connected resistor 72 (or some other resistive component), as shown in Figure 2.

The resistor 72 shown is a linear resistor, although a non-linear resistor may be used instead. Moreover, the resistor 72 is shown connected in series between the discharge switching element 46, i.e. the AC grounding switch 48, of the discharge circuit 44 and ground 50, although again this need not necessarily be the case.

The inclusion of such a resistor 72 in the second power converter 70 allows the energy associated with the voltage level of a particular DC transmission conduit electrically connected with one or other of the first and second DC terminals 12, 14 to be dissipated by the resistor, i.e. as excess heat, rather than or as well as within a corresponding discharge valve 28' of the power converter 70.

Other than that, the second power converter 70, and more particularly the control unit 56 located therein can be programmed to operate in any one or more of the various manners described hereinabove with respect to the first power converter 10 and the various differing embodiments thereof.

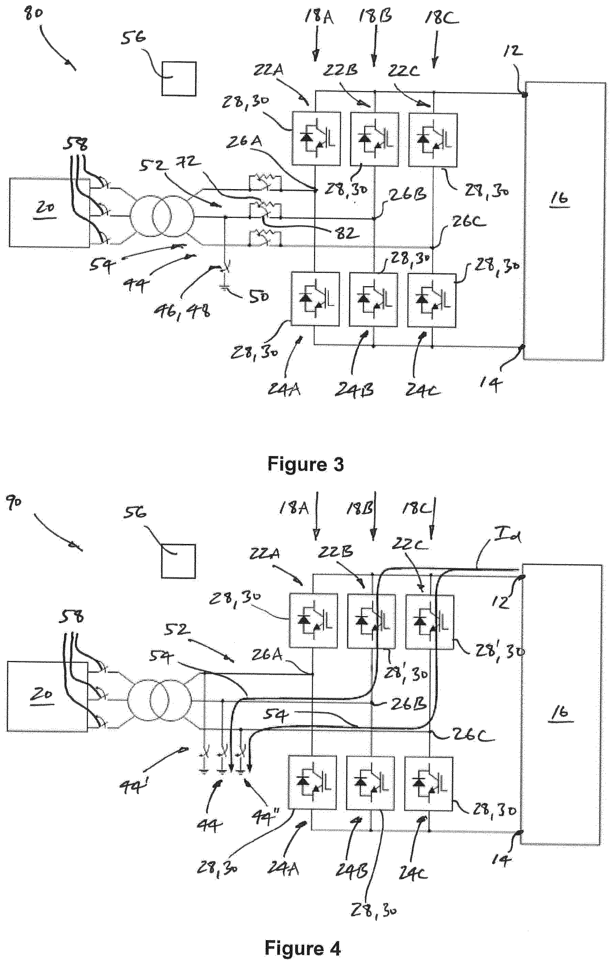

A third power converter 80 according to another embodiment of the invention is shown schematically in Figure 3.

The third power converter 80 is similar to the second power converter 70 and like features again share the same reference numerals. The third power converter 80 differs from the second power converter 70 however in that its discharge circuit 44 includes a series connected resistor 72 that is selectively switchable in and out of the said discharge circuit 44.

Such selective switching is made possible by arranging the resistor 72 in parallel with a resistor switch 82 which can be selectively opened (i.e. turned off), to force current to flow through the resistor 72, or closed (i. e. turned on) to cause current to bypass the resistor 72.

The third power converter 80, and the control unit 56 located therein, is otherwise programmed to operate in any one or more of the various manners described hereinabove with respect to the first power converter 10 and the various differing embodiments thereof.

Figure 4 shows a fourth power converter 90 according to a further embodiment of the invention.

The fourth power converter 90 is similar to the first power converter 10 and like features share the same reference numerals.

However, the fourth power converter 90 differs from the first power converter 10 in that it includes first, second and third discharge circuits 44, 44' and 44", each of which is connected between a respective, single corresponding converter limb 18A, 18B, 18C and ground 50. More particularly each discharge circuit 44, 44' 44" is electrically connected to an AC network side 52 of the AC terminal 26A, 26B, 26C within the corresponding converter limb 18A, 18B, 18C, although this need not necessarily be the case.

In use, any one or more of the discharge circuits 44, 44' 44" may be used to reduce the voltage level of a DC transmission conduit electrically connected to one or other of the first and second DC terminals 12, 14.

For example, as shown in Figure 4, the first and third discharge circuits 44, 44" may be utilised for such a purpose by designating the valve 28 in the first limb portion 22B, 22C of the converter limbs 18B 18C associated with the second and third phases b, c of the AC network 20 as respective discharge valves 28'.

Thereafter the control unit 56 of the fourth power converter 90 may be programmed to operate in any one or more of the various manners described herein above with respect to the first power converter 10 and the various embodiments thereof to selectively allow a discharge current to flow through each of the said limb portions 22B, 22C, and hence through each of the corresponding first and third discharge circuits 44, 44".

Moreover, in further embodiments based on the fourth power converter 90, one or more the discharge circuits 44, 44' 44" may additionally include a series-connected resistor, which may or may not be selectively switchable in and out of the corresponding discharge circuit 44, 44' 44".

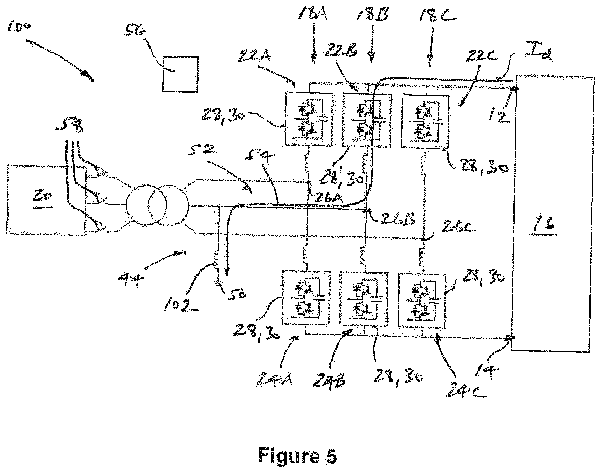

A fifth power converter is designated generally by reference numeral 100, as shown in Figure 5.

The fifth power converter 100 is similar to the first power converter 10, and like features share the same reference numerals. The fifth power converter 100 differs, however, from the first power converter 10 in that within the single discharge circuit 44 the discharge switching element 46, i.e. the AC grounding switch 48, is replaced instead by a grounding reactor 102.

In use, providing a DC voltage or only a slowly varying voltage waveform is applied to the grounding reactor 102 then its effective impedance is low, and so it is possible for a discharge current $I_d$ to again flow from, e.g. the first DC terminal 12 to ground 50 through the said discharge circuit 44 of the fifth power converter 100.

The control unit 56 of the fifth power converter 100 is again programmed to operate in any one or more of the various manners described herein above with respect to the first power converter 10, and the various embodiments thereof, to selectively allow a discharge current to flow through, e.g. the first limb portion 22B of the converter limb 18B associated with the second phase b of the AC network 20, and hence through the discharge circuit 44.

Moreover, in further embodiments based on the fifth power converter 100, the discharge circuit 44 may additionally include a series-connected resistor, which may or may not be selectively switchable in and out of the discharge circuit 44. Such further embodiments might also include a plurality of discharge circuits, each of which includes at least a grounding reactor.

It follows that if a given DC transmission network includes at least one power converter 10; 70; 80; 90; 100 according to an embodiment of the invention described hereinabove, i.e. at least one power converter 10; 70; 80; 90; 100 having a discharge circuit 44, 44', 44" configured in one of the manners set out above, then the voltage level of either of the DC transmission conduits in such a network could be reduced or dissipated completely, as required.

**Claims**

1. A HVDC power converter (10; 70; 80; 90; 100) comprising:

   first and second DC terminals (12, 14) for connection to a DC network (16);
   at least one converter limb (18A, 18B, 18C), the or each converter limb (18A, 18B, 18C) extending between the first and second DC terminals (12, 14), the or each converter limb (18A, 18B, 18C) including first and second limb portions (22A, 22B, 22C, 24A, 24B, 24C) separated by a respective AC terminal (26A, 26B, 26C), the AC terminal (26A, 26B, 26C) of the or each converter limb (18A, 18B, 18C) being for connection to a respective AC phase (a, b, c) of an AC network (20), the or each first limb portion (22A, 22B, 22C) extending between the first DC terminal (12) and a corresponding AC terminal (26A, 26B, 26C), the or each second limb portion (24A, 24B, 24C) extending between the second DC terminal (14) and a corresponding AC terminal (26A, 26B, 26C), each limb portion (22A, 22B, 22C, 24A, 24B, 24C) including a respective valve (28) operable to selectively permit the flow of current through the corresponding limb portion (22A, 22B, 22C, 24A, 24B, 24C) and hence between a respective DC terminal (12, 14) and the corresponding AC terminal (26A, 26B, 26C) to thereby in use transfer power between the DC and AC networks (16, 20); and
   at least one discharge circuit (44) electrically connected between at least one converter limb (18A, 18B, 18C) and ground (50) to selectively provide a current discharge path (54) from the or each converter limb (18A, 18B, 18C) to ground (50).

2. A HVDC power converter (10; 70; 80; 90; 100) according to Claim 1, wherein at least one discharge circuit (44) includes a selectively openable and closable discharge switching element (46).

3. A HVDC power converter (10; 70; 80; 90; 100) according to Claim 1, wherein at least one discharge circuit (44) includes a grounding reactor (102).

4. A HVDC power converter (10; 70; 80; 90; 100) according to Claim 2 or Claim 3, wherein at least one discharge circuit (44) additionally includes a series-connected resistor (72).

5. A HVDC power converter (10; 70; 80; 90; 100) according to Claim 4, wherein one or more series-connected resistors (72) is selectively switchable in and out of the corresponding discharge circuit (44).

6. A HVDC power converter (10; 70; 80; 90; 100) according to any preceding claim, wherein at least one discharge circuit (44) is electrically connected to an AC network side (52) of the AC terminal (26A, 26B, 26C) within a corresponding converter limb (18A, 18B, 18C).

7. A HVDC power converter (10; 70; 80; 90; 100) according to any preceding claim, including a plurality of discharge circuits (44, 44', 44") each of which is electrically connected between a respective single converter limb (18A, 18B, 18C) and ground (50).

8. A HVDC power converter (10; 70; 80; 90; 100) according to any preceding claim, further including a control unit (56) programmed to control the switching of each valve (28) within the power converter (10; 70; 80; 90; 100) and, when it is desired to reduce the voltage of a DC transmission conduit of interest electrically connected in use to one or other of the first and second DC terminals (12, 14), being further programmed to:

   (a) control each valve (28) to prevent the flow of current therethrough; and
   (b) control the valve (28') located within at least one limb portion (22A, 22B, 22C, 24A, 24B, 24C) lying between the said DC terminal (12, 14) to which the DC transmission conduit of interest is electrically connected and the discharge circuit (44), to allow the flow of discharge current through the said valve (28') and hence through the or each corresponding limb portion (22A, 22B, 22C, 24A, 24B, 24C) and on through the discharge circuit (44).

9. A HVDC power converter (10; 70; 80; 90; 100) according to Claim 8, wherein each valve (28) therein includes a chain-link converter (30) formed from a plurality of series connected chain link modules (32), each of which chain link module (32) includes a plurality of individual switching elements (34) electrically connected with an energy storage device (36).

10. A HVDC power converter (10; 70; 80; 90; 100) according to Claim 9, wherein the control unit (56) is programmed to control the chain-link converter (30) located within at least one said limb portion (22A, 22B, 22C, 24A, 24B, 24C) lying between the said DC terminal (12, 14) to which the DC transmission conduit of interest is electrically connected and the discharge circuit (44) to allow current to flow therethrough by selectively switching each chain link module (32) within the or each said chain-link converter (30) into a bypassed state.

11. A HVDC power converter (10; 70; 80; 90; 100) according to Claim 9 or Claim 10, wherein the control unit (56) is programmed to control the chain-link converter (30) located within at least one said limb portion (22A, 22B, 22C, 24A, 24B, 24C) lying between the said DC terminal (12, 14) to which the DC transmission conduit of interest is electrically connected and the discharge circuit (44) to allow current to flow therethrough by selectively switching each chain link module (32) within the or each said chain-link converter (30) between respective bypassed and full blocking states.

12. A HVDC power converter (10; 70; 80; 90; 100) according to any of Claims 9 to 11, wherein the control unit (56) is programmed to control the chain-link converter (30) located within at least one said limb portion (22A, 22B, 22C, 24A, 24B, 24C) lying between the said DC terminal (12, 14) to which the DC transmission conduit of interest is electrically connected and the discharge circuit (44) to allow current to flow therethrough by selectively having one or more chain link modules (32) within the or each said chain-link converter (30) provide a voltage source while the or each other chain link module (32) within the or each said chain-link converter (30) is switched into a bypassed state whereby a cumulative voltage arises across the or each said chain-link converter (30).

Figure 1(a)

Figure 1(b)

Figure 1(c)

Figure 1(d)

Figure 1(e)

Figure 2

Figure 3

Figure 4

Figure 5

Europäisches
Patentamt

European
Patent Office

Office européen
des brevets

# EUROPEAN SEARCH REPORT

Application Number

EP 16 20 1775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/200859 A1 (JIANG-HAEFNER YING [SE] ET AL) 8 August 2013 (2013-08-08)<br>* abstract *<br>* paragraphs [0009], [0037] - [0047], [0056], [0071] - [0077]; figures 1-5, 9 * | 1-11 | INV.<br>H02M1/32<br>H02M7/483<br><br>ADD.<br>H02M1/36 |
| X<br><br>A | US 2013/063989 A1 (JIANG-HAEFNER YING [SE] ET AL) 14 March 2013 (2013-03-14)<br>* abstract *<br>* paragraphs [0029], [0037], [0038], [0045], [0048] - [0050]; figures 1, 2B, 6, 7 * | 1-4,6,7<br><br>5,8-12 | |
| A | WO 2010/102667 A1 (ABB TECHNOLOGY AG [CH]; HOSINI FALAH [SE]; SVENSSON JAN R [SE]; HASLER) 16 September 2010 (2010-09-16)<br>* abstract *<br>* page 8, lines 3-6, 20-22; figures 1, 2, 5 * | 1-12 | |

|  | TECHNICAL FIELDS SEARCHED (IPC) |
|---|---|
|  | H02M |

The present search report has been drawn up for all claims

| Place of search | Date of completion of the search | Examiner |
|---|---|---|
| The Hague | 31 May 2017 | Van der Meer, Paul |

EPO FORM 1503 03.82 (P04C01)

**ANNEX TO THE EUROPEAN SEARCH REPORT
ON EUROPEAN PATENT APPLICATION NO.**

EP 16 20 1775

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2017

| Patent document cited in search report | | | Publication date | Patent family member(s) | | | Publication date |
|---|---|---|---|---|---|---|---|
| US 2013200859 | A1 | | 08-08-2013 | CN | 103125068 | A | 29-05-2013 |
| | | | | EP | 2599210 | A1 | 05-06-2013 |
| | | | | US | 2013200859 | A1 | 08-08-2013 |
| | | | | WO | 2012013245 | A1 | 02-02-2012 |
| US 2013063989 | A1 | | 14-03-2013 | CN | 102934310 | A | 13-02-2013 |
| | | | | EP | 2577833 | A1 | 10-04-2013 |
| | | | | US | 2013063989 | A1 | 14-03-2013 |
| | | | | WO | 2011150963 | A1 | 08-12-2011 |
| WO 2010102667 | A1 | | 16-09-2010 | NONE | | | |

EPO FORM P0459

For more details about this annex : see Official Journal of the European Patent Office, No. 12/82